# EUROPEAN PATENT SPECIFICATION

(11) **EP 1 263 243 B1**
(45) Date of publication and mention of the grant of the patent: **24.01.2007**
(21) Application number: 02009323.3
(22) Date of filing: 02.05.2002
(51) Int. Cl.: H04Q 3/00

(54) **Emergency notification and override service in a multimedia network**
Notrufanzeigedienst und Übersteuerungsdienst in einem Multimedianetzwerk
Service de notification d'urgence et de neutralisation dans un réseau multimedia

(30) Priority: 31.05.2001 US 871515
(43) Date of publication of application: 04.12.2002
(73) Proprietor: ALCATEL, 75008 Paris (FR)
(72) Inventor: Mani, Babu V., Plano, Texas 75025 (US)
(74) Representative: Rausch, Gabriele

(56) References cited:
- WO-A-00/08820
- US-A- 5 661 779

## Description

### BACKGROUND OF THE INVENTION

### Technical Field of the Invention

The present invention generally relates to telecommunication and data communication services. More particularly, and not by way of any limitation, the present invention is directed to an emergency notification and override service in a multimedia-capable next-generation network.

### Description of Related Art

Over the last two decades or so, telecommunication services have evolved rapidly from simple telephone calls and fax communications to a host of advanced services such as multi-party conferences, voice mail, call forwarding, caller ID, call waiting, et cetera. This rapid evolution has been made possible primarily due to the successful deployment of the Intelligent Network (IN) and Advanced IN (AIN) architecture using Signaling System No. 7 (SS7) as the out-of-band signaling protocol infrastructure. Similarly, data services have also followed a significant transformation from basic text messaging in the 1980s to the World Wide Web and Internet of today, where transporting diverse media has become commonplace. For example, bandwidth-intensive services such as desktop video conferencing, video on demand, telemedicine, real-time audio, and many other applications are driving the demand for simultaneous support of different types of services on the same public network.

Coupled with the phenomenal popularity of the Internet, recently there has been a tremendous interest in using the packet-switched network (PSN) infrastructure employed in the data networks (e.g., those based on Internet Protocol (IP) addressing) as a replacement for, and/or as an adjunct to, the existing circuit-switched network (CSN) infrastructure deployed in today's voice networks. Several advantages are expected to be realized due to such integration. From network operators' viewpoint, the inherent traffic aggregation in PSN allows for a reduction in the cost of transmission and the infrastructure cost per end-user. Ultimately, such cost reductions enable the network operators to pass on the savings to subscribers or, more generally, users. Also, operators of a new breed of service-centric networks (referred to as next-generation networks, distinct from the existing voice-centric and data-centric networks) can offer enhanced services with integrated voice/data/video to users who will be using endpoints of diverse multimedia capabilities. Another example can be found in document WO 00/08820.

As alluded to hereinabove, several advances have taken place in both data and voice services. However, the current data-centric and voice-centric services do not provide the gamut of enhancements that are possible with the use of multimedia capabilities in a next-generation network.

### SUMMARY OF THE INVENTION

Accordingly, the present invention advantageously provides an enhanced emergency message notification and override service in a multimedia-capable network wherein a select emergency alert scheme is effectuated with respect to an incoming emergency message. Preferably, the multimedia-capable network is provisioned as a next-generation network having a decoupled service architecture that is facilitated by the use of multimedia softswitch technology.

In one aspect, the present invention is directed to an emergency message notification system and method in a multimedia-capable network for effectuating a subscriber-selectable notification scheme with respect to an incoming emergency message directed to the subscriber from an authorized entity. In certain exemplary embodiments, an emergency override feature is also implemented wherein any restrictions to notification delivery may be superseded. Upon receiving the incoming emergency message at a network node serving the subscriber, a multimedia session engine is invoked to launch a call treatment application for the subscriber. Based on at least a portion of the parametric information relating to the incoming emergency message, an emergency notification profile associated with the subscriber is queried to determine a particular emergency alert scheme to be provided. Preferably, a subscriber-selectable device is actuated thereafter in order to effectuate the selected emergency alert scheme with respect to the incoming emergency message. In a preferred exemplary embodiment, the subscriber-selectable device comprises a multimedia-capable interface operable with the subscriber terminal, wherein the alert scheme is effectuated without interrupting the current session or sessions in which the terminal may be engaged.

Depending on how the service architecture is implemented, the call treatment application may be provisioned as a service application hosted on a third-party server platform coupled to a public packet-switched network (e.g., the Internet), as a telecom-hardened, carrier-class service application hosted on dedicated IN/AIN-compliant nodes such as multimedia Service Control Points (SCPs) and application servers, or as a centralized service with service logic embedded in SS7 nodes (e.g., Service Switching Points or SSPs) and multimedia softswtich elements.

In another aspect, the present invention is directed to a computer-accessible medium operable with at least a network element disposed in a multimedia-capable next-generation network. The computer-accessible medium is further operable to carry a sequence of instructions which, when executed by at least one processing entity associated with the network, causes to be performed at least a portion of the steps of the multimedia-capable emergency message notification method set forth hereinabove.

### BRIEF DESCRIPTION OF THE DRAWINGS

A more complete understanding of the present invention may be had by reference to the following Detailed Description when taken in conjunction with the accompanying drawings wherein:

FIG. 1 depicts an exemplary high-level architectural scheme of a next-generation, multimedia-capable network employed for practicing the teachings of the present invention;

FIG. 2 depicts a functional block diagram associated with the exemplary high-level architectural scheme shown in FIG. 1;

FIG. 3 depicts a functional block diagram of a multimedia call/session engine operable in accordance with the teachings of the present invention;

FIG. 4 depicts an exemplary next-generation network capable of multimedia services;

FIG. 5 depicts an exemplary service network which employs a multimedia-based emergency notification system and method in accordance with the teachings of the present invention;

FIG. 6 depicts an exemplary multimedia interface with browser navigation for effectuating multimedia calls and subscriber-selectable emergency notification alerts in accordance with the teachings of the present invention;

FIG. 7 depicts an exemplary embodiment of a subscriber's emergency notification profile;

FIG. 8 is a flow chart of the steps involved in an exemplary emergency notification method of the present invention;

FIG. 9 is a flow chart of the steps involved in an exemplary methodology for directing an emergency message towards a subscriber by an authorized individual; and

FIG. 10 is a flow chart of the steps involved in an exemplary methodology for directing an emergency message towards a subscriber by an entity.

### DETAILED DESCRIPTION OF THE DRAWINGS

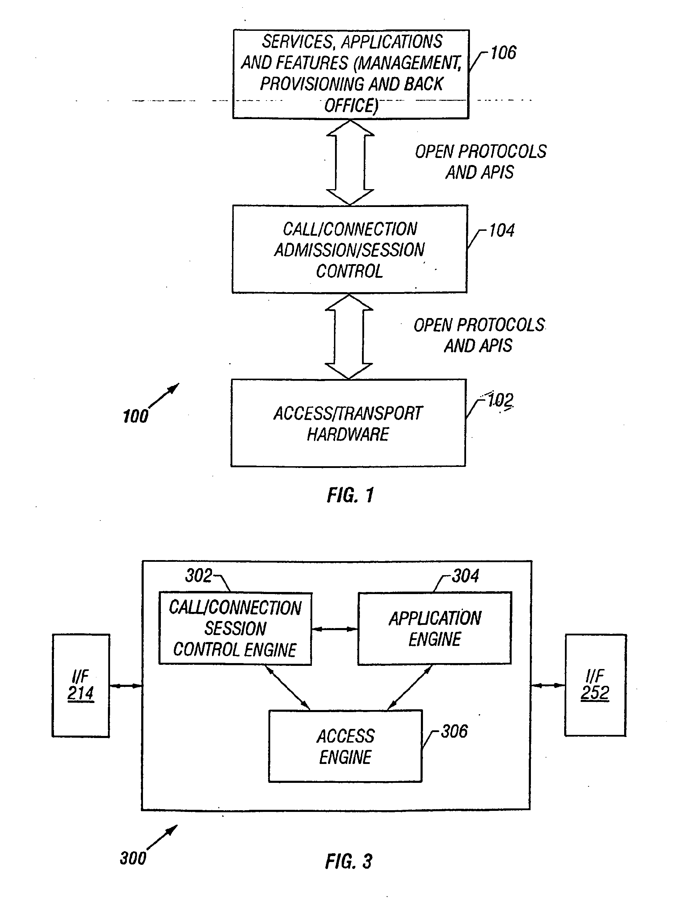

In the drawings, like or similar elements are designated with identical reference numerals throughout the several views thereof, and the various elements depicted are not necessarily drawn to scale. Referring now to FIG. 1, depicted therein is an exemplary high-level architectural scheme 100 of a next-generation network that is capable of effectuating multimedia communications. In the context of the present patent application, the term "multimedia" broadly refers to visual information, aural information, and other information. Visual information is generally divided into two categories: (i) still pictures and graphics, and (ii) full-motion video or animation. Aural information includes both speech and non-speech categories. Other information categories can include text, computer data, etc. Multimedia communication involves, accordingly, integrated presentation of text, graphics, video, animation, sound, and the like, using different media and multiple information elements in a single application or session.

The exemplary architectural scheme 100 of the next-generation network is preferably effectuated by implementing what is known as softswitch technology. Essentially, the softswitch functionality is operable to separate the call control functions of a call (or, "session control" functions in the context of a multimedia communication session) from the media gateways (i.e., transport layer(s)) that carry it. Call control features can vary, but call routing, admission control, connection control (such as creating and tearing down sessions), and signaling interworking -- such as from SS7 to Session Initiation Protocol (SIP) -- are usually included. These functionalities may collectively be referred to as session control. The softswitch functionality can also include: (i) the ability to route a call based on customer database information, (ii) the ability to transfer control of the call to a node disposed in another network, and (iii) support of management functions such as provisioning, billing, etc.

Continuing to refer to FIG. 1, the architectural scheme 100 accordingly includes an access/transport level 102 which interacts with a session control level 104 via a plurality of open-standard protocols and application programming interfaces (APIs). The session control level 104 is operable, in turn, to interface with an application services/features level 106 via a second set of open-standard protocols and APIs. As will be described in greater detail hereinbelow, various multimedia services, applications, and features may be provided as part of this services level 106. Also, some of the back office management and provisioning functionality can be included herewith.

Those skilled in the art should readily appreciate that several protocols and APIs are available for effectuating the architectural scheme 100 set forth hereinabove, which effectively decouples the session control layer from the underlying access/transport layer as well as the service application layer. For example, these protocols -- which effectuate media control APIs, signaling APIs, and service APIs -- include: SIP, H.323, Call Processing Language (CPL), Media Gateway Controller Protocol (MGCP), Internet Protocol Device Control (IPDC), H.248, MEGACO, Real-Time Protocol (RTP), Java™ APIs for Integrated Networks (JAIN), Resource Reservation Protocol (RSVP), Parlay, Lightweight Directory Access Protocol (LDAP), Markup Languages such as Extensible Markup Language (XML), Multi Protocol Label Switching (MPLS), and the like. Additionally, access to the existing IN/AIN service architecture is also available via suitable SS7 or IP-based interfaces.

The softswitch functionality is realized essentially as a software implementation that can reside on a single network element, or be distributed across multiple nodes. Also, different levels of decoupling and interfacing may be provided in an actual softswitch implementation. For example, SS7 functionality may be embedded within a softswitch element or kept separate. In other implementations, the softswitch functionality may sit on top of a media gateway (MGW), instead of being physically distinct, as long as transport and control planes are decoupled.

By creating separate planes for control and switching and leveraging software's programmability, service providers can combine transport services and control protocols freely in order to facilitate seamless migration from one service to another. Best-in-class solutions and products from multiple vendors can be advantageously deployed in the next-generation network because of open standards and APIs. Further, open APIs to the service layer (including a suitable service creation environment (SCE)), along with service creation, service mediation and service brokering standards, enable creation of numerous advanced, multimedia-enhanced services with faster service rollout.

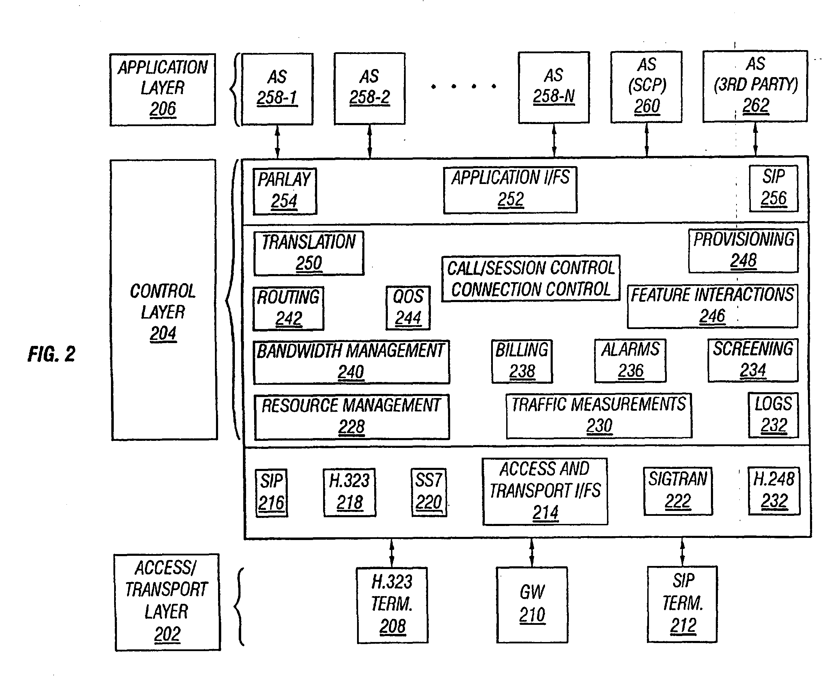

FIG. 2 depicts a functional block diagram associated with the exemplary architectural scheme shown in FIG. 1. Three layers corresponding to the three decoupled levels of the architectural scheme are particularly illustrated. An access/transport layer 202 is exemplified with a plurality of multimedia-capable H.323 terminals 208, GWs 210 (including MGWs and Access Gateways or AGWs) for providing access to one or more Integrated Access Devices (IADs) (not shown) and other communication appliances, and multimedia-capable SIP terminals 212. For purposes of the present invention, all such multimedia-capable access devices (including multimedia-capable phones, computers, game stations, television sets, etc.) may be referred to as multimedia appliances and are preferably provided with one or more man/machine interfaces (e.g., video/still cameras, microphones, display screens, keyboards, pointing devices, joy sticks, track balls, voice recorders, audio-to-text or text-to-audio converters, and the like) for accepting or capturing multimedia responses or inputs associated with a user. Also, in some exemplary implementations, the multimedia appliances may be equipped with suitable biometric ID readers and sensors, e.g., fingerprint readers, retinal scanners, voice recognition systems, etc.

Continuing to refer to FIG. 2, control layer 204 of the decoupled architectural scheme illustrates the functionality of an exemplary multimedia call/session engine implemented as part of a multimedia softswitch in a network. A call/session and connection control block 226 is provided with a plurality of access and transport interfaces 214 to couple to the underlying access/transport layer 202. As alluded to hereinabove, these interfaces include, e.g., SIP interfaces 216, H.323 interfaces 218, SS7 interfaces 220, SigTran interfaces 222 (for SS7-over-IP) and H.248 interfaces 224. The functionality of the call/session and connection control block 226 is associated with a plurality of modules such as, for instance, a resource management module 228, a traffic metering/measurement module 230, an event log module 232, a screening module 234, alarms 236, a billing module 238, a bandwidth management module 240, a routing module 242, a Quality of Service (QoS) module 244, feature interactions module 246, a provisioning module 248, and a translation module 250.

A plurality of application interfaces 252 are available to the multimedia session engine for interacting with an application layer 206. A Parlay interface 254 and a SIP interface 256 are exemplified herein. Reference numerals 258-1 through 258-N refer to a plurality of application servers (ASs) that are operable to host various services, features and management policies. One or more legacy service nodes (e.g., a Service Control Point or SCP) may also be provided as part of the application layer 206 in the form of one or several AS nodes, e.g., AS 260. Preferably, interfaces to third-party AS nodes 262 are also included.

Application layering in the decoupled architectural scheme can be architected in three ways. Custom applications such as e-commerce, e-business, e-residence (home appliance control, residential security, etc.), e-health, and the like, may reside on the Internet as applications hosted on third-party platforms. Specialized services such as Virtual Private Networks (VPNs), prepaid services, etc., and multimedia applications for business and residential use may be provided as distributed applications hosted on dedicated telecom-hardened platforms. Carrier-class AS nodes, multimedia-capable SCPs, etc. typically comprise such platforms. A select group of legacy service offerings, for commercial as well as residential applications, may be provided as centralized applications that are based on SS7 platforms (such as signal switching points (SSPs)) and softswitch nodes.

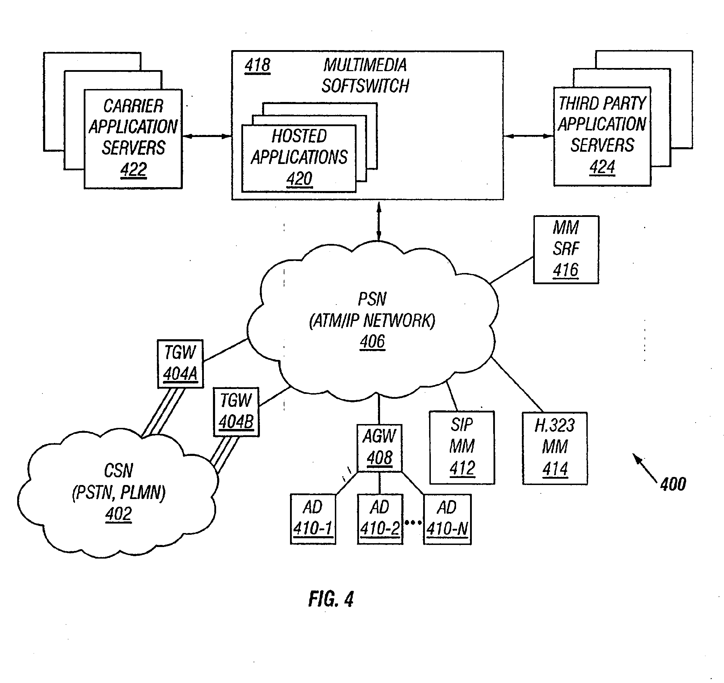

Referring now to FIG. 3, depicted therein is a high-level functional block diagram of a call/session engine 300 of a multimedia softswitch operable in accordance with the teachings of the present invention. As described in detail hereinabove, both access/transport interfaces 214 and application layer interfaces 252 are available to the call/session engine 300 for effectuating its softswitch functionality. A control engine 302 is responsible for call/session control and connection control (analogous to the traditional call control function or CCF). An application engine 304 is included for application triggering and managing feature/policy interaction with respect to a triggered service application. In addition, the application engine 304 is preferably operable to open suitable APIs for supporting enhanced services. When third-party applications are invoked, the application engine 304 may also provide firewall management and subscriber access management for service selection and initiation. An access engine 306 is operable to effectuate online user authentication and authorization and validate service usage rights. Also, roaming management may be provided by the access engine 306 for subscription retrieval, roaming retrieval and registration negotiation.

FIG. 4 depicts an exemplary next-generation multimedia network 400 that is capable of providing a plurality of multimedia services in accordance with the teachings of the present invention. For purposes of the present invention, network 400 and its variants and exemplary implementations will be referred to as a "service network." One or more legacy circuit-switched networks (CSNs) 402 such as the Public Switched Telephone Network (PSTN) for wireline telephony and the Public Land Mobile Network (PLMN) for wireless telephony are coupled to one or more packet-switched networks (PSNs) 406 such as the IP-based Internet, ATM-based packet network, etc. Further, the PSN portion 406 may also encompass such other private IP-based networks as, e.g., corporate intranets, enterprise networks, home networks, and the like. Accordingly, in one embodiment, PSN 406 represents an inter-networking network of a combination of such IP networks. A plurality of Trunk Gateways (TGWs), e.g., TGW 404A and TGW 404B, are disposed between the CSN and PSN portions of the network 400 for effectuating the interfacing therebetween. An Access Gateway (AGW) node 408 is coupled to the PSN portion 406 for facilitating access to the network from a plurality of access devices (ADs) 410-1 through 410-N. One or more multimedia-capable SIP terminals 412 and multimedia-capable H.323 terminals 414 are operable to originate and terminate multimedia sessions in conjunction with various multimedia services supported by the network 400.

One or more optional multimedia (MM) Service Resource Function (SRF) nodes, e.g., MM-SRF 416, are coupled to PSN 400 for providing bearer resource functionality for converged voice/data services, protocols to request these services, and open APIs for programming bearer-resource-intensive applications as well as content/announcement files. The MM-SRF node 416 does not set up a bearer path between two parties, however, as there is no such dedicated bearer connection in the context of IP networking. Rather, only a logical connection is established between the parties.

Within the multimedia-based service network framework, some of the functions of the MM-SRF node 416 include the following: (i) operating in the media access/resources plane for bearer services by providing multimedia resource services, (ii) providing standard protocols, (iii) interfacing to AS nodes through a multimedia softswitch (e.g., softswitch 418), and (iv) enabling third-party programmability of bearer services and content/announcements through the open APIs. Those skilled in the art should appreciate that some of these functionalities may be embedded within the multimedia softswitch 418 or be distributed across several MM-capable nodes depending on the integration level of the softswitch.

A plurality of hosted applications 420 are co-located at the multimedia softswitch node 418. The specific type of the applications is dependent on the service architecture implementation and application layering. Some of the exemplary applications may include network announcements (in conjunction with SRF 416), video conferencing, digit collection, unified (multimedia) messaging, media streaming and custom announcements, automatic speech recognition (ASR), text-to-speech (TTS), user verification using multimedia, and various enhanced services such as multimedia call waiting, direct connect services, distinctive call notification, emergency override service, presentation of call party profiles based on multimedia, etc. It should be recognized, in addition, that some of these multimedia services may be provisioned as applications hosted on carrier AS nodes 422 and third-party AS nodes 424, with suitable APIs associated therewith, respectively.

Although the exemplary network embodiment 400 shown in FIG. 4 does not explicitly illustrate SS7 interfaces for effectuating legacy IN/AIN services, those skilled in the art should appreciate that various such SS7 interfaces and SS7-capable signaling gateways (SGWs) may also be appropriately disposed in the network for providing SS7 functionality.

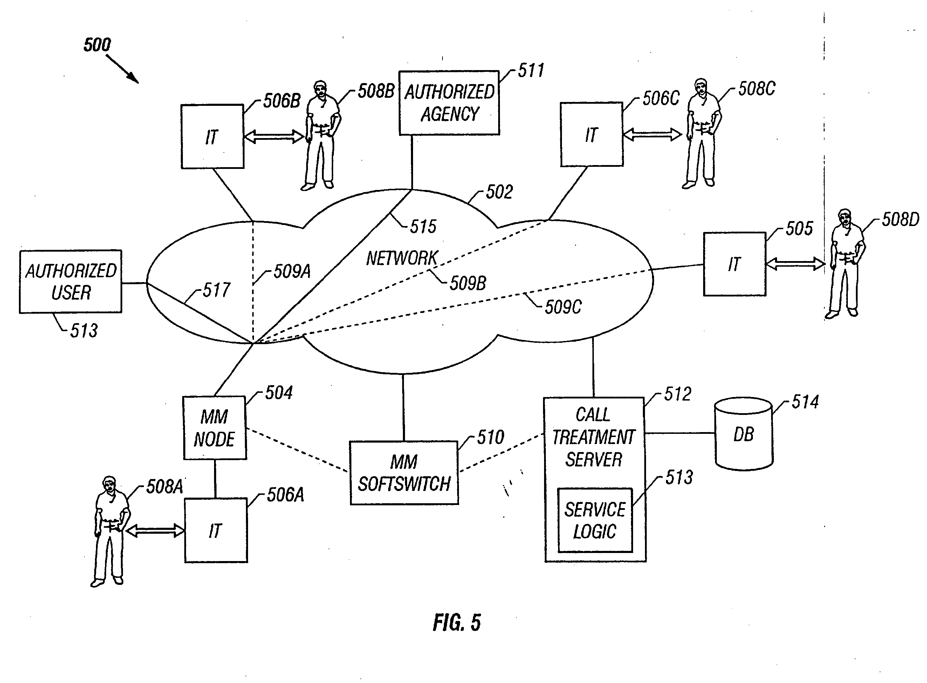

Referring now to FIG. 5, depicted therein is an exemplary service network arrangement 500 which employs an emergency notification system and method in a multimedia-capable next-generation network 502 in accordance with the teachings of the present invention. It should be appreciated by those skilled in the art upon reference hereto that in one embodiment, the network 502 may be comprised of a combination of various PSN and CSN portions and their hybrids, including local and inter-carrier network portions. A multimedia node or network element 504 is operable to serve a plurality of subscribers, e.g., subscriber 508A operating a multimedia IT device 506A for originating and/or terminating calls. Similarly, other call parties operating suitable ITs, e.g., call party 508B with IT 506B and call party 508C with IT 506C, are also operably coupled to the network 502.

A softswitch 510 having the multimedia call/session engine functionality as described hereinabove is disposed in the network 502 for call routing and application triggering. Although the softswitch 510 is illustrated as a separate node in this embodiment, it should be recognized that the softswitch functionality may also be provided as part of the serving multimedia node 504. A call treatment server 512 is provided as an application server node coupled to the network 502, wherein suitable multimedia service logic 513 is provided for querying a subscriber emergency notification profile database. Again, as alluded to hereinabove, it should be apparent that the functionality of the call treatment server node 512 may be distributed or embedded, depending upon the service architecture and application layering.

Continuing to refer to FIG. 5, the emergency notification system of the present invention includes a database environment 514 associated with the call treatment server node 512 via a suitable interface. Various emergency notification alert modes, options, restrictions and policies, other related features such as selective override options, and the like are stored in the database environment 514. In a presently preferred exemplary embodiment of the present invention, the database environment 514 is capable of being updated by the subscribers as well as the network operator.

Reference numeral 509A refers to a call connection in the network 502 between subscriber 508A being served by the multimedia network element 504 and a call party 508B, who may or may not be a subscriber. As used herein, a call party may be a calling party or a called party with respect to another party, e.g., subscriber 508A. In similar fashion, reference numeral 509B refers to a call connection between subscriber 508A and another call party 508C. Reference numeral 509C refers to yet another call connection between subscriber 508A and a non-subscriber call party 508D. It should be appreciated that some of the terminals operated by the parties, e.g., terminal 505 operated by the party 508D, may not be multimedia-compatible. Further, the call parties may be located in different geographic areas and can comprise several types, e.g., family members, business acquaintances, et cetera.

Continuing to refer to FIG. 5, an authorized agency (e.g., a governmental entity) 511 is operably coupled to network 502 for generating appropriate emergency messages as may be warranted in different situations such as public safety, inclement weather, police action, and the like. Further, the emergency messages generated by the agency 511 may also include information regarding the characteristics of the various emergency situations, e.g., type, degree and severity of an emergency, target area to which the message is to be disseminated, indication as to whether recipients of a message are to respond in a particular manner, originating area of the emergency message, override capabilities (wherein a delivery restriction option selected by a subscriber in the target area is superseded by the emergency message to effect delivery), et cetera.

Another entity, referred to as authorized user 513, is operable to generate emergency messages towards a recipient, e.g., IT 506A. In one embodiment, the authorized user 513 may include a subscriber who is away from his or her primary information appliance, e.g., multimedia IT 506A, and is desirous of transmitting an emergency message to a particular device of his or her choice based on a notification profile associated therewith. It should be apparent that in an exemplary application, the particular device to which the emergency message is to be delivered can be the multimedia terminal IT 506A itself. User 513 may also include any individual (a subscriber's family member, subscriber's supervisor, or a third-party) who can be verified, authorized and authenticated, either by the network or via self-authentication means, and attempts to generate an emergency message towards a particular recipient in disposed in the network arrangement 500.

Reference numeral 515 refers to a path effectuated in the network arrangement 500 for disseminating the emergency messages generated by the authorized agency 511 with respect to particular subscriber 508A. Similarly, reference numeral 517 refers to a path effectuated in the network arrangement 500 with respect to the emergency message generated by the authorized user 513 towards IT 506A. For purposes of the present invention, agencies, individual users and other entities operable to generate emergency messages may be collectively referred to as authorized entities. In a presently preferred exemplary embodiment of the present invention, the emergency message paths may be established between an authorized entity and the intended recipient without disrupting an ongoing call connection involving the recipient, e.g., call connection 509A, 509B or 509C.

Moreover, in some exemplary embodiments, the recipient party may also have additional service features such as, for example, multiple call waiting (i.e., the capability to wait on multiple incoming calls) and call party profile presentation where a call party profile is presented to the party on a selectable basis.

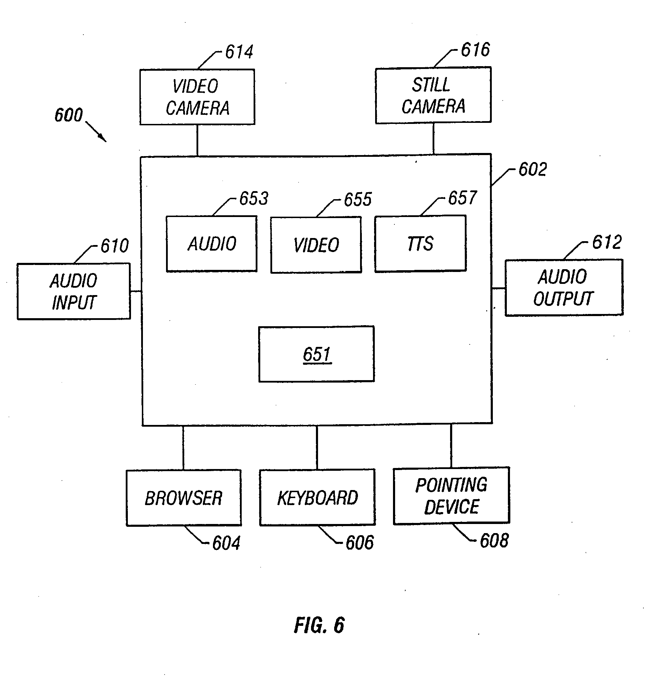

FIG. 6 depicts an exemplary multimedia interface 600 with browser navigation capability that is operable with multimedia-capable terminals for effectuating multimedia calls and emergency notification alerts in accordance with the teachings of the present invention. A display 602 is operable to present a graphic user interface (GUI) with a plurality of call-oriented icons which can be activated via drag-and-drop interaction under the control of a browser client 604 running on a multimedia terminal, e.g., IT 506A depicted in FIG. 5. At least a portion (e.g, portion 651) of the display 602 may be utilized for presenting video/photo indicia of the call party to the subscriber. Additionally, the portion 651 or other display portions may be utilized for presenting emergency notification pop-up windows, banners, etc. associated with particular emergency messages. A keyboard or keypad 606 and a cursor pointing device 608 (such as, e.g., a mouse or trackball, and their equivalents) are provided for facilitating the drag-and-drop interaction between the subscriber and the interface. Suitable audio input devices 610 and audio output devices 612 are associated with the interface 600 for effectuating live speech responses and/or emergency notification announcements. A digital video camera 614 and a still camera 616 are also included for capturing live video and still photographs of the subscriber in order to provide live images as multimedia responses to a call party engaged in a session with the subscriber.

If call waiting (CW) notification features are available to the subscriber, a plurality of waiting callers may be presented on the display 602 as suitable "icons" (not shown in this FIG.). It should be recognized that these icons may comprise audio clip icons, image icons, animation graphics, flashing text messages, et cetera, associated with the waiting callers. Further, the display 602 can include additional icons relating to selected call party profile presentation modes if the subscriber has such service capabilities.

The exemplary multimedia interface 600 also includes a plurality of call modes for effectuating different types of multimedia calls between the subscriber and other parties. An Audio icon 653 is operable to indicate a voice-only mode. Similarly, a Video icon 655 indicates a video-capable call mode that includes audio. A TTS icon 657 is operable, when activated, to convert text messages to speech and vice versa. In addition, icons relating to selective call diversion, call transfer, call rejection, and call acceptance may also be provided so as to enable the subscriber to select different call treatments and/or to divert an incoming call to a voice mail box, answering service, or a different terminal, etc.

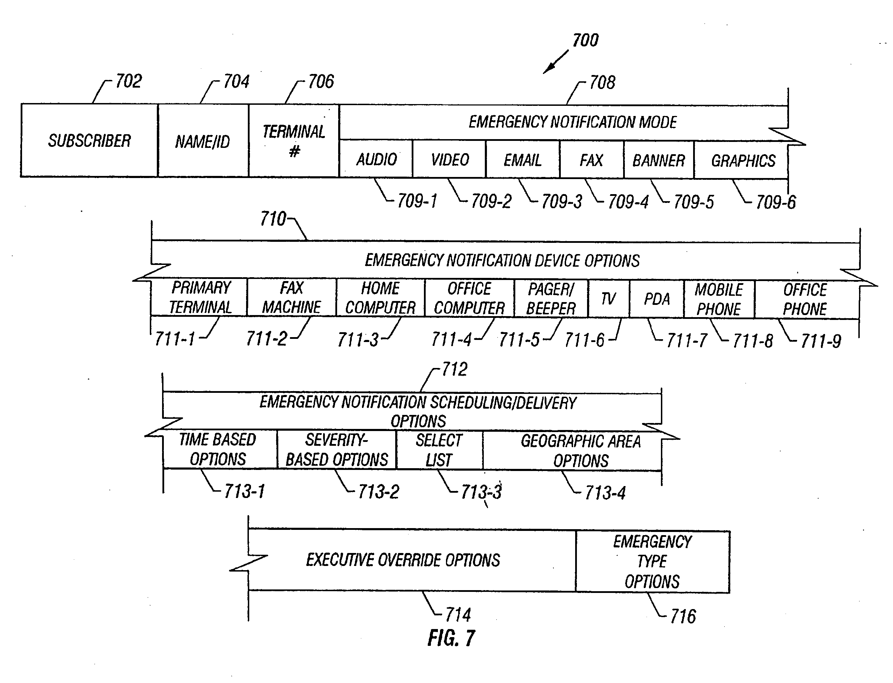

Referring now to FIG. 7, depicted therein is an exemplary embodiment of an emergency notification profile 700 for a subscriber 702 operable with respect to the emergency notification service of the present invention. It should be apparent that in addition to the subscriber profiles such as the notification profile 700, the database environment 514 (shown in FIG. 5) may also be populated with further service features, options and policies relating to other multimedia-enhanced services, e.g., call party profile presentation, distinctive call notification, multiple call waiting, and the like. Moreover, whereas a single subscriber's profile record is exemplified herein, those skilled in the art will recognize that the applicable database environment is typically comprised of numerous such records operable with respect to a plurality of subscribers.

Preferably, the subscriber 702 is associated with a primary terminal/station by way of a name or other ID 704. A directory number 706 is included to identify the terminal/station associated with the subscriber. In accordance with the teachings of the present invention, an emergency notification alert mode 708 is also specified for the subscriber 702. The emergency notification alert mode 710 is preferably comprised of numerous notification methods and features, wherein the subscriber is capable of selecting one or more schemes for delivering an alert with respect to an incoming emergency message at the terminal. Exemplary emergency notification options include: audio announcements 709-1, video announcements 709-2, email transmission 709-3, facsimile transmission 709-4, data transmission involving banner screens 709-5, graphics windows 709-6, and the like. The emergency notification alert mode 708 is operable with multiple notification device options 710 for effectuating the message delivery. Exemplary notification device options include: primary terminal 711-1, fax machine 711-2, home computer 711-3, office computer 711-4, pager or beeper 711-5, TV or other entertainment equipment 711-6, personal digital assistant (PDA) 711-7, mobile phone 711-8, office phone 711-9, and any secondary home phones (not explicitly referenced in this FIG.), and the like. A plurality of emergency notification scheduling and delivery options 712 are also available for further customizing emergency message delivery based on subscriber preferences and restrictions. Such options may include time-based options 713-1 (e.g., time-of-day), severity-based options 713-2 (e.g., emergency messages relating to a natural disaster of a particular magnitude may be selected to be delivered to the subscriber's pager regardless of restrictions), select user list options 713-3 (e.g., emergency messages generated by the subscriber's family members may have precedence), and geographic area options 713-4 (e.g., emergency messages generated by the authorized entities from a particular area may have precedence).

Continuing to refer to FIG. 7, the exemplary subscriber notification profile 700 further comprises executive override options 714 wherein the network can supersede any prevailing restrictions with respect to emergency message delivery. Additionally, various emergency-type options 716 may also be included in the subscriber's emergency notification profile, which may preferably be provided as policies and preferences based on certain types of emergencies that can interact with one or more options already described hereinabove.

Those skilled in the art should realize upon reference hereto that the emergency notification profile 700 described herein is illustrative only. Accordingly, both the contents and specific implementation of a subscriber profile database may vary depending upon the objectives of a particular application. It should therefore be recognized that the scope of the present invention is not circumscribed by the specifics of a subscriber profile database in any manner.

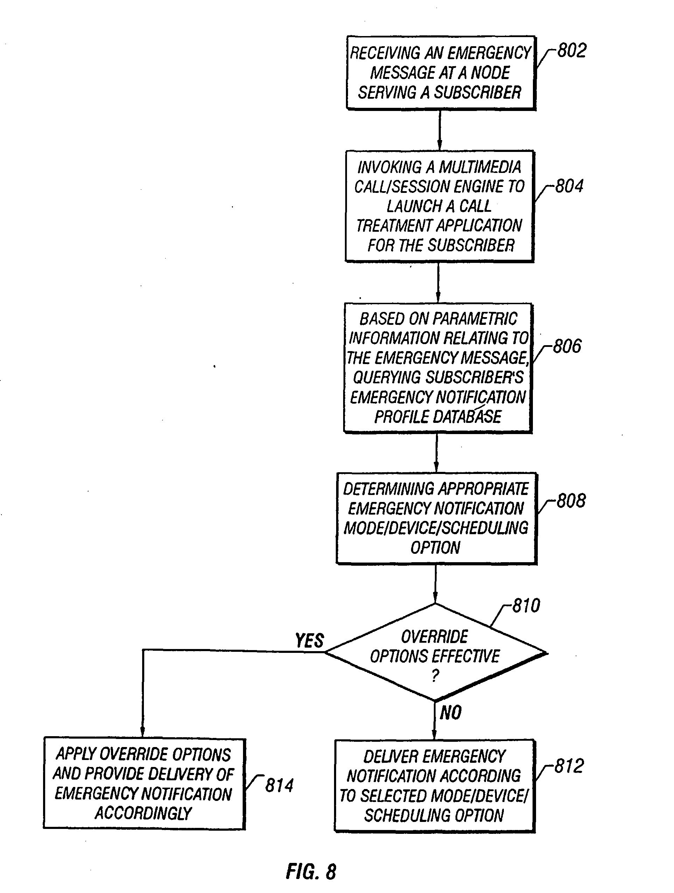

FIG. 8 is a flow chart of the steps involved in an exemplary emergency notification scheme of the present invention. Upon receiving an incoming emergency message from an authorized entity at a node serving the subscriber (step 802), a multimedia call session engine is invoked by the serving network node disposed in a service network structure (such as, e.g., service network arrangement 500 depicted in FIG. 5) to launch a call treatment application with respect to the incoming emergency message (step 804). The incoming emergency message may preferably include parametric information comprised of, for example, emergency type, magnitude of the emergency, target area to be served, geographic area information relating to the message originator (i.e., authorized entity), and the like. In some embodiments, the parametric information may also include one or more indicia to identify override criteria with respect to the incoming emergency message. The call treatment application's service logic is operable to query the subscriber profile database based on the parametric information in the incoming emergency message (step 806). Responsive at least in part to the results obtained from the database query, a determination is made thereafter with respect to a particular emergency alert scheme to be provided (step 808). A further determination may be made in order to verify if any override options are applicable and/or effective (decision block 810). If so, an emergency notification in accordance with the applicable override options is delivered, wherein the notification scheme includes an appropriate combination of a select alert transmission mode as well as the device (step 814). If no override options are applicable, the emergency notification is then delivered in accordance with the selected alert transmission mode and device combination, after appropriately resolving any interactions involving scheduling options, type options, severity options, et cetera (step 812). In either case, a subscriber-selectable device is actuated for effectuating an appropriate emergency notification alert. In one presently preferred exemplary embodiment, at least a portion of a suitable multimedia-capable interface (e.g., multimedia interface 600 described hereinabove) may be actuated for delivering the notification alert.

Those skilled in the art should therefore appreciate that emergency notification of the present invention can be based on: (i) privilege/authorization level of the calling party, (ii) nature of notification and criticality/nature of emergency, (iii) preference identified by the called party (i.e., the subscriber), and (iv) active devices available for notification. In one implementation, the privilege level can be established by "operator verification," alluded to in the foregoing description. Also, subscription for the privilege level may be identified/verified by entering a PIN, or verified by the system (e.g., a VPN can maintain manager-employee privileges) or an appropriate governmental agency. Further, in some other implementations, the subscriber's preferences may also include a "disallow" feature, wherein notification is not allowed based on certain conditions (e.g., calling party not verified, method of notification not acceptable at the time of notification, et cetera). In addition, a sequence of events (event flow) may be specified such that where a particular alert event fails with respect to a notification, a different alert event may be effectuated therefor.

Moreover, the emergency notification service of the present invention may be provided with interaction with certain other services. For example, call waiting or call forwarding services may be coupled to various emergency notification schemes in accordance with pre-defined service options in a subscriber's profile. Additionally, notification may be provided to multiple locations and/or devices in yet further exemplary implementations of the emergency notification service. Status notification can also be given to the calling party or entity (e.g., where no call is set up between the calling and called parties).

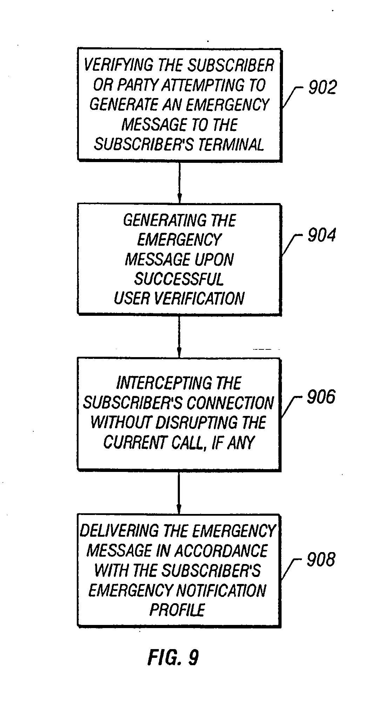

FIG. 9 is a flow chart of the steps involved in an exemplary methodology for directing an emergency message towards an intended recipient (e.g., a subscriber) by an authorized individual. When an individual attempts to place an emergency message for transmission in the service network, a verification and authentication process may be effectuated by the network itself or by means of subscriber-based authentication (step 902). Upon successful user verification, an emergency message with appropriate parametric information is generated (step 904). An emergency message path is established to the subscriber terminal without disrupting any current connections that the terminal may be engaged in (step 906). In one embodiment, the emergency message path comprises a one-way transmission path initially and, upon validation by the intended recipient, a full duplex path may be established. Thereafter, the emergency message is delivered in accordance with the notification profile as described hereinabove (step 908).

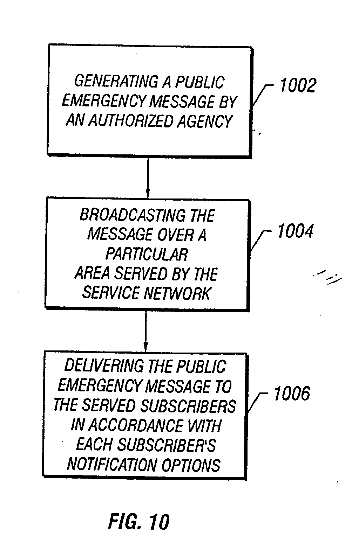

Referring now to FIG. 10, shown therein is a flow chart of the steps involved in an exemplary methodology for directing an emergency message towards a subscriber by an entity. In one embodiment, the entity is operable as an authorized agency to place public emergency messages in the service network and, accordingly, it may not be necessary to effectuate an express verification scheme prior to emergency messaging. In a further embodiment, the entity may be a business enterprise attempting to effectuate an emergency messaging service over a virtual private network (VPN) that forms a portion of the service network. Upon obtaining appropriate approval, a suitable "public" emergency message is generated for dissemination over a target area served by at least a portion of the service network or over the VPN portion (step 1002). As alluded to hereinabove, the emergency message may include applicable parametric information for facilitating customizable delivery thereof.

In one exemplary embodiment, the emergency message may be transmitted in broadcast mode to the target serving area (step 1004). The serving node associated therewith is operable to launch call treatment applications for the subscribers in the target area to determine appropriate notification schemes. Responsive thereto, the emergency message is delivered to the served subscribers in accordance with the individual subscriber profiles depending on the various service options (step 1006).

Based upon the foregoing Detailed Description, it should be readily apparent that the present invention advantageously provides an enhanced emergency message notification service using multimedia within the context of a next-generation network. By architecting the service as part of a decoupled application layer with open protocols and APIs, not only can service interoperability with different network elements and platforms be ensured, but service rollout can be streamlined as well for faster delivery. Furthermore, the emergency notification service of the present invention provides several advancements and improvements over the conventional schemes. For example, because the notification modes can be customized based on a host of features and options, it is possible for the subscriber to discern more about an incoming emergency. By specifying the various alert modes and scheduling options in accordance with the teachings hereof, the subscriber can ensure that an emergency alert reaches him or her with greater probability. Moreover, the multimedia features of the emergency notification service of the present invention provide a more enriched notification experience than the conventional emergency schemes.

## Claims

1. An emergency notification method for use in a multimedia-capable network, comprising the steps:
upon receiving an incoming emergency message from an authorized entity at a node serving a subscriber, invoking a multimedia session engine to launch a call treatment application for said subscriber;
based on at least a portion of parametric information relating to said incoming emergency message, querying an emergency notification profile associated with said subscriber;
responsive to said step of querying, determining by said call treatment application a particular emergency alert scheme to be provided with respect to said incoming emergency message; and
actuating a subscriber-selectable device for effectuating said particular emergency alert scheme.

2. The emergency notification method for use in a multimedia-capable network as set forth in claim 1, wherein said subscriber-selectable device comprises at least a portion of a multimedia interface operable with said subscriber's terminal.

3. The emergency notification method for use in a multimedia-capable network as set forth in claim 1, further comprising the steps:
determining whether said particular emergency alert scheme is unavailable for delivery with respect to said incoming emergency message; and
if so, selecting an alternative emergency alert scheme to notify said incoming emergency message.

4. The emergency notification method for use in a multimedia-capable network as set forth in claim 1, further comprising the steps:
determining whether an override option is effective against said particular emergency alert scheme with respect to said incoming emergency message; and
if so, notifying said incoming emergency message in accordance with said override option.

5. The emergency notification method for use in a multimedia-capable network as set forth in claim 1, wherein said particular emergency alert scheme includes an audio transmission mode.

6. The emergency notification method for use in a multimedia-capable network as set forth in claim 1, wherein said particular emergency alert scheme includes a video transmission mode.

7. The emergency notification method for use in a multimedia-capable network as set forth in claim 1, wherein said particular emergency alert scheme includes an email transmission mode.

8. The emergency notification method for use in a multimedia-capable network as set forth in claim 1, wherein said particular emergency alert scheme includes a facsimile transmission mode.

9. The emergency notification method for use in a multimedia-capable network as set forth in claim 1, wherein said particular emergency alert scheme includes a paging mode.

10. The emergency notification method for use in a multimedia-capable network as set forth in claim 1, wherein said particular emergency alert scheme includes a graphics transmission mode.

11. The emergency notification method for use in a multimedia-capable network as set forth in claim 1, wherein said particular emergency alert scheme is based on emergency type information associated with said incoming emergency message.

12. The emergency notification method for use in a multimedia-capable network as set forth in claim 1, wherein said particular emergency alert scheme is based on emergency severity information associated with said incoming emergency message.

13. The emergency notification method for use in a multimedia-capable network as set forth in claim 1, wherein said particular emergency alert scheme is based on said incoming emergency message's originating area.

14. The emergency notification method for use in a multimedia-capable network as set forth in claim 1, wherein said particular emergency alert scheme is based on said authorized entity's identification.

15. The emergency notification method for use in a multimedia-capable network as set forth in claim 14, wherein said authorized entity comprises an authorized individual.

16. The emergency notification method for use in a multimedia-capable network as set forth in claim 14, wherein said authorized entity comprises an authorized governmental agency.

17. The emergency notification method for use in a multimedia capable network as set forth in claim 14, wherein said authorized entity comprises an authorized commercial entity.

18. A emergency notification system for use in a multimedia-capable network, comprising :
means for invoking a multimedia session engine to launch a call treatment application for a subscriber with respect to an incoming emergency message initiated by a message originator
database means operable to store an emergency notification profile associated with said subscriber;
service logic means associated with said call treatment application for determining a particular emergency alert scheme to be provided with respect to said incoming emergency message by interacting with said database means; and
means for actuating a subscriber-selectable device for effectuating said particular emergency alert scheme.

19. The emergency notification system for use in a multimedia-capable network as set forth in claim 18, wherein said subscriber-selectable device comprises at least a portion of a multimedia interface operable with said subscriber's terminal.

20. The emergency notification system for use in a multimedia-capable network as set forth in claim 18, wherein said particular emergency alert scheme comprises providing at least one of an audio transmission, a video transmission, a graphics transmission, a paging transmission, and an email transmission.

21. The emergency notification system for use in a multimedia-capable network as set forth in claim 18, further comprising means to select an alternative emergency alert scheme when said particular emergency alert scheme is unavailable.

22. The emergency notification system for use in a multimedia-capable network as set forth in claim 21, wherein said alternative emergency alert scheme comprises activating said subscriber's home computer for notifying said incoming emergency message.

23. The emergency notification system for use in a multimedia-capable network as set forth in claim 21, wherein said alternative emergency alert scheme comprises activating said subscriber's office computer for notifying said incoming emergency message.

24. The emergency notification system for use in a multimedia-capable network as set forth in claim 21, wherein said alternative emergency alert scheme comprises activating said subscriber's pager for notifying said incoming emergency message.

25. The emergency notification system for use in a multimedia-capable network as set forth in claim 21, wherein said alternative emergency alert scheme comprises activating said subscriber's mobile phone for notifying said incoming emergency message.

26. The emergency notification system for use in a multimedia-capable network as set forth in claim 21, wherein said alternative emergency alert scheme comprises activating said subscriber's office phone for notifying said incoming emergency message.

27. The emergency notification system for use in a multimedia-capable network as set forth in claim 21, wherein said alternative emergency alert scheme comprises activating said subscriber's home phone for notifying said incoming emergency message.

28. The emergency notification system for use in a multimedia-capable network as set forth in claim 21, wherein said alternative emergency alert scheme comprises activating said subscriber's personal digital assistant (PDA) for notifying said incoming emergency message.

29. The emergency notification system for use in a multimedia-capable network as set forth in claim 21, wherein said alternative emergency alert scheme comprises activating said subscriber's television (TV) set for notifying said incoming emergency message.

30. The emergency notification system for use in a multimedia-capable network as set forth in claim 21, wherein said alternative emergency alert scheme comprises activating said subscriber's laptop computer for notifying said incoming emergency message.

31. The emergency notification system for use in a multimedia-capable network as set forth in claim 21, wherein said alternative emergency alert scheme comprises activating said subscriber's palmtop computer for notifying said incoming emergency message.

32. The emergency notification system for use in a multimedia-capable network as set forth in claim 18, wherein said message originator includes an authorized individual.

33. The emergency notification system for use in a multimedia-capable network as set forth in claim 18, wherein said message originator includes an authorized entity.

34. A computer-accessible medium operable with a network element disposed in a multimedia-capable next-generation network, said computer-accessible medium carrying a sequence of instructions which, when executed by at least one processing entity associated with said multimedia-capable next-generation network, causes the following steps to be performed:
upon receiving an incoming emergency message from an authorized entity at a node serving a subscriber, invoking a multimedia session engine to launch a call treatment application for said subscriber;
based on at least a portion of parametric information relating to said incoming emergency message, querying an emergency notification profile associated with said subscriber;
responsive to said step of querying, determining by said call treatment application a particular emergency alert scheme to be provided with respect to said incoming emergency message; and
actuating a subscriber-selectable device for effectuating said particular emergency alert scheme.

35. The computer-accessible medium operable with a network element disposed in a multimedia-capable next-generation network as set forth in claim 34, wherein said subscriber-selectable device comprises at least a portion of a multimedia interface operable with said subscriber' s terminal.

36. The computer-accessible medium operable with a network element disposed in a multimedia-capable next-generation network as set forth in claim 34, wherein said particular emergency alert scheme comprises providing at least one of an audio transmission, a video transmission, a graphics transmission, a paging transmission, and an email transmission.

37. The computer-accessible medium operable with a network element disposed in a multimedia-capable next-generation network as set forth in claim 34, further comprising another sequence of instructions for selecting an alternative emergency alert scheme when said particular emergency alert scheme is unavailable.

38. The computer-accessible medium operable with a network element disposed in a multimedia-capable next-generation network as set forth in claim 37, wherein said alternative emergency alert scheme comprises activating at least one of the following devices for notifying said incoming emergency message based on said emergency notification profile associated with said subscriber: a home computer, an office computer, a pager, a mobile phone, a home phone, an office phone, a personal digital assistant (PDA), a television (TV) set, a laptop computer and a palmtop device.

## Patentansprüche

1. Ein Notrufanzeigeverfahren zur Verwendung in einem multimedia-fähigen Netzwerk, das folgende Schritte umfasst:
Bei Empfang einer eintreffenden Notrufmeldung von einer autorisierten Einheit an einem Knoten, der einen Teilnehmer bedient, Aufruf einer Multimedia-Sitzungs-Engine, um eine Anruf-Behandlungs-Anwendung für den Teilnehmer zu starten;
Auf der Grundlage mindestens eines Teils einer parametrischen Information, die sich auf die eintreffende Notrufmeldung bezieht, Abfrage eines zu dem Teilnehmer gehörenden Notrufanzeigeprofils;
Als Reaktion auf den Abfrage-Schritt durch die Anruf-Behandlungs-Anwendung Bestimmung einer speziellen Notruf-Alarm-Maßnahme, die bezüglich der eintreffenden Notrufmeldung bereitgestellt werden muss; und
Betätigung einer vom Teilnehmer wählbaren Vorrichtung zur Auslösung der speziellen Notruf-Alarm-Maßnahme.

2. Das Notrufanzeigeverfahren zur Verwendung in einem multimedia-fähigen Netzwerk, wie in Anspruch 1 dargelegt, wobei die vom Teilnehmer wählbare Vorrichtung mindestens einen Teil einer Multimedia-Schnittstelle umfasst, die mit dem Teilnehmer-Endgerät betrieben werden kann.

3. Das Notrufanzeigeverfahren zur Verwendung in einem multimedia-fähigen Netzwerk, wie in Anspruch 1 dargelegt, das weiterhin folgende Schritte umfasst:
Bestimmung, ob die spezielle Notruf-Alarm-Maßnahme zur Lieferung bezogen auf die eintreffende Notrufmeldung nicht verfügbar ist; und
falls dem so ist, Auswahl einer alternativen Notruf-Alarm-Maßnahme zur Anzeige der eintreffenden Notrufmeldung.

4. Das Notrufanzeigeverfahren zur Verwendung in einem multimedia-fähigen Netzwerk, wie in Anspruch 1 dargelegt, das weiterhin folgende Schritte umfasst:
Bestimmung, ob eine Übersteuerungs-Option gegen die spezielle Notruf-Alarm-Maßnahme bezüglich der eintreffenden Notrufmeldung wirksam ist; und
falls ja, Anzeige der eintreffenden Notrufmeldung entsprechend der Übersteuerungs-Option.

5. Das Notrufanzeigeverfahren zur Verwendung in einem multimedia-fähigen Netzwerk, wie in Anspruch 1 dargelegt, wobei die spezielle Notruf-Alarm-Maßnahme einen Audio-Übertragungs-Modus enthält.

6. Das Notrufanzeigeverfahren zur Verwendung in einem multimedia-fähigen Netzwerk, wie in Anspruch 1 dargelegt, wobei die spezielle Notruf-Alarm-Maßnahme einen Video-Übertragungs-Modus enthält.

7. Das Notrufanzeigeverfahren zur Verwendung in einem multimedia-fähigen Netzwerk, wie in Anspruch 1 dargelegt, wobei die spezielle Notruf-Alarm-Maßnahme einen Email-Übertragungs-Modus enthält.

8. Das Notrufanzeigeverfahren zur Verwendung in einem multimedia-fähigen Netzwerk, wie in Anspruch 1 dargelegt, wobei die spezielle Notruf-Alarm-Maßnahme einen Faksimile-Übertragungs-Modus enthält.

9. Das Notrufanzeigeverfahren zur Verwendung in einem multimedia-fähigen Netzwerk, wie in Anspruch 1 dargelegt, wobei die spezielle Notruf-Alarm-Maßnahme einen Funkruf-übertragungs-Modus enthält.

10. Das Notrufanzeigeverfahren zur Verwendung in einem multimedia-fähigen Netzwerk, wie in Anspruch 1 dargelegt, wobei die spezielle Notruf-Alarm-Maßnahme einen Grafik-Übertragungs-Modus enthält.

11. Das Notrufanzeigeverfahren zur Verwendung in einem multimedia-fähigen Netzwerk, wie in Anspruch 1 dargelegt, wobei die spezielle Notruf-Alarm-Maßnahme auf einer Notruf-Typ-Information basiert, die der eintreffenden Notrufmeldung zugeordnet ist.

12. Das Notrufanzeigeverfahren zur Verwendung in einem multimedia-fähigen Netzwerk, wie in Anspruch 1 dargelegt, wobei die spezielle Notruf-Alarm-Maßnahme auf einer Notruf-Dringlichkeits-Information basiert, die der eintreffenden Notrufmeldung zugeordnet ist.

13. Das Notrufanzeigeverfahren zur Verwendung in einem multimedia-fähigen Netzwerk, wie in Anspruch 1 dargelegt, wobei die spezielle Notruf-Alarm-Maßnahme auf dem Ursprungs-Bereich der eintreffenden Notrufmeldung basiert.

14. Das Notrufanzeigeverfahren zur Verwendung in einem multimedia-fähigen Netzwerk, wie in Anspruch 1 dargelegt, wobei die spezielle Notruf-Alarm-Maßnahme auf der Kennung der autorisierten Einheit basiert.

15. Das Notrufanzeigeverfahren zur Verwendung in einem multimedia-fähigen Netzwerk, wie in Anspruch 14 dargelegt, wobei die autorisierte Einheit eine autorisierte Einzelperson ist.

16. Das Notrufanzeigeverfahren zur Verwendung in einem multimedia-fähigen Netzwerk, wie in Anspruch 14 dargelegt, wobei die autorisierte Einheit eine autorisierte Regierungsbehörde ist.

17. Das Notrufanzeigeverfahren zur Verwendung in einem multimedia-fähigen Netzwerk, wie in Anspruch 14 dargelegt,
wobei die autorisierte Einheit eine autorisierte kommerzielle Einheit ist.

18. Das Notrufanzeigesystem zur Verwendung in einem multimedia-fähigen Netzwerk, das folgendes umfasst:
Mittel zum Aufruf einer Multimedia-Sitzungs-Engine, um eine Anruf-Behandlungs-Anwendung für einen Teilnehmer bezüglich einer eintreffenden Notrufmeldung, die von einem Nachrichten-Absender ausgelöst wurde, zu starten;
Datenbank-Mittel, die in der Lage sind, ein dem Teilnehmer zugeordnetes Notrufanzeigeprofil zu speichern;
Dienstlogik-Mittel, die mit der Anruf-Behandlungs-Anwendung verbunden sind, um eine bestimmte Notruf-Alarm-Maßnahme zu bestimmen, die bezüglich der eintreffenden Notrufmeldung bereitzustellen ist, indem mit den Datenbank-Mitteln interagiert wird; und
Mittel zur Betätigung einer vom Teilnehmer wählbaren Vorrichtung zur Auslösung der speziellen Notruf-Alarm-Maßnahme.

19. Das Notrufanzeigesystem zur Verwendung in einem multimedia-fähigen Netzwerk, wie in Anspruch 18 dargelegt, wobei die vom Teilnehmer wählbare Vorrichtung mindestens einen Teil einer Multimedia-Schnittstelle umfasst, die mit dem Teilnehmer-Endgerät betrieben werden kann.

20. Das Notrufanzeigesystem zur Verwendung in einem multimedia-fähigen Netzwerk, wie in Anspruch 18 dargelegt, wobei die spezielle Notruf-Alarm-Maßnahme die Bereitstellung mindestens einer aus einer Audio-Übertragung, einer Video-Übertragung, einer Grafik-Übertragung, einer Funkruf-Übertragung und einer Email-Übertragung umfasst.

21. Das Notrufanzeigesystem zur Verwendung in einem multimedia-fähigen Netzwerk, wie in Anspruch 18 dargelegt, das weiterhin Mittel enthält, eine alternative Notruf-Alarm-Maßnahme auszuwählen, wenn die spezielle Notruf-Alarm-Maßnahme nicht verfügbar ist.

22. Das Notrufanzeigesystem zur Verwendung in einem multimedia-fähigen Netzwerk, wie in Anspruch 21 dargelegt, wobei die alternative Notruf-Alarm-Maßnahme die Aktivierung des Heim-Computers des Teilnehmers zur Anzeige der eintreffenden Notrufmeldung umfasst.

23. Das Notrufanzeigesystem zur Verwendung in einem multimedia-fähigen Netzwerk, wie in Anspruch 21 dargelegt, wobei die alternative Notruf-Alarm-Maßnahme die Aktivierung des Büro-Computers des Teilnehmers zur Anzeige der eintreffenden Notrufmeldung umfasst.

24. Das Notrufanzeigesystem zur Verwendung in einem multimedia-fähigen Netzwerk, wie in Anspruch 21 dargelegt, wobei die alternative Notruf-Alarm-Maßnahme die Aktivierung des Funkruf-Empfängers des Teilnehmers zur Anzeige der eintreffenden Notrufmeldung umfasst.

25. Das Notrufanzeigesystem zur Verwendung in einem multimedia-fähigen Netzwerk, wie in Anspruch 21 dargelegt, wobei die alternative Notruf-Alarm-Maßnahme die Aktivierung des Mobiltelefons des Teilnehmers zur Anzeige der eintreffenden Notrufmeldung umfasst.

26. Das Notrufanzeigesystem zur Verwendung in einem multimedia-fähigen Netzwerk, wie in Anspruch 21 dargelegt, wobei die alternative Notruf-Alarm-Maßnahme die Aktivierung des Telefons im Büro des Teilnehmers zur Anzeige der eintreffenden Notrufmeldung umfasst.

27. Das Notrufanzeigesystem zur Verwendung in einem multimedia-fähigen Netzwerk, wie in Anspruch 21 dargelegt, wobei die alternative Notruf-Alarm-Maßnahme die Aktivierung des Telefons im Haus des Teilnehmers zur Anzeige der eintreffenden Notrufmeldung umfasst.

28. Das Notrufanzeigesystem zur Verwendung in einem multimedia-fähigen Netzwerk, wie in Anspruch 21 dargelegt, wobei die alternative Notruf-Alarm-Maßnahme die Aktivierung des Personal Digital Assistant (PDA) des Teilnehmers zur Anzeige der eintreffenden Notrufmeldung umfasst.

29. Das Notrufanzeigesystem zur Verwendung in einem multimedia-fähigen Netzwerk, wie in Anspruch 21 dargelegt, wobei die alternative Notruf-Alarm-Maßnahme die Aktivierung des Fernsehgerätes des Teilnehmers zur Anzeige der eintreffenden Notrufmeldung umfasst.

30. Das Notrufanzeigesystem zur Verwendung in einem multimedia-fähigen Netzwerk, wie in Anspruch 21 dargelegt, wobei die alternative Notruf-Alarm-Maßnahme die Aktivierung des Laptop-Computers des Teilnehmers zur Anzeige der eintreffenden Notrufmeldung umfasst.

31. Das Notrufanzeigesystem zur Verwendung in einem multimedia-fähigen Netzwerk, wie in Anspruch 21 dargelegt, wobei die alternative Notruf-Alarm-Maßnahme die Aktivierung des Palmtop-Computers des Teilnehmers zur Anzeige der eintreffenden Notrufmeldung umfasst.

32. Das Notrufanzeigesystem zur Verwendung in einem multimedia-fähigen Netzwerk, wie in Anspruch 18 dargelegt, wobei der Nachrichten-Absender eine autorisierte Einzelperson ist.

33. Das Notrufanzeigesystem zur Verwendung in einem multimedia-fähigen Netzwerk, wie in Anspruch 18 dargelegt, wobei der Nachrichten-Absender eine autorisierte Einheit ist.

34. Ein für einen Computer zugängliches Medium, das mit einem Netzwerkelement betrieben werden kann, das in einem multimedia-fähigen Netzwerk der nächsten Generation angeordnet ist, wobei das für einen Computer zugängliche Medium eine Sequenz von Instruktionen trägt, die wenn sie von mindestens einer Verarbeitungseinheit ausgeführt wird, die mit dem multimedia-fähigen Netzwerk der nächsten Generation verbunden ist, die Ausführung der folgenden Schritte bewirkt:
Bei Empfang einer eintreffenden Notrufmeldung von einer autorisierten Einheit an einem Knoten, der einen Teilnehmer bedient, Aufruf einer Multimedia-Sitzungs-Engine, um eine Anruf-Behandlungs-Anwendung für den Teilnehmer zu starten;
Auf der Grundlage mindestens eines Teils einer parametrischen Information, die sich auf die eintreffende Notrufmeldung bezieht, Abfrage eines zu dem Teilnehmer gehörenden Notrufanzeigeprofils;
Als Reaktion auf den Abfrage-Schritt durch die Anruf-Behandlungs-Anwendung Bestimmung einer speziellen Notruf-Alarm-Maßnahme, die bezüglich der eintreffenden Notrufmeldung bereitgestellt werden muss; und
Betätigung einer vom Teilnehmer wählbaren Vorrichtung zur Auslösung der speziellen Notruf-Alarm-Maßnahme.

35. Das für einen Computer zugängliche Medium, das mit einem Netzwerkelement betrieben werden kann, das in einem multimedia-fähigen Netzwerk der nächsten Generation angeordnet ist, wie in Anspruch 34 dargelegt, wobei die vom Teilnehmer wählbare Vorrichtung mindestens einen Teil einer Multimedia-Schnittstelle umfasst, die mit dem Teilnehmer-Endgerät betrieben werden kann.

36. Das für einen Computer zugängliche Medium, das mit einem Netzwerkelement betrieben werden kann, das in einem multimedia-fähigen Netzwerk der nächsten Generation angeordnet ist, wie in Anspruch 34 dargelegt, wobei die spezielle Notruf-Alarm-Maßnahme die Bereitstellung mindestens einer aus einer Audio-Übertragung, einer Video-Übertragung, einer Grafik-Übertragung, einer Funkruf-Übertragung und einer Email-übertragung umfasst.

37. Das für einen Computer zugängliche Medium, das mit einem Netzwerkelement betrieben werden kann, das in einem multimedia-fähigen Netzwerk der nächsten Generation angeordnet ist, wie in Anspruch 34 dargelegt, das weiterhin eine andere Sequenz von Instruktionen enthält, um eine alternative Notruf-Alarm-Maßnahme auszuwählen, wenn die spezielle Notruf-Alarm-Maßnahme nicht verfügbar ist.

38. Das für einen Computer zugängliche Medium, das mit einem Netzwerkelement betrieben werden kann, das in einem multimedia-fähigen Netzwerk der nächsten Generation angeordnet ist, wie in Anspruch 37 dargelegt, wobei die alternative Notruf-Alarm-Maßnahme die Aktivierung mindestens einer der folgenden Vorrichtungen zur Anzeige der eintreffenden Notrufmeldung auf der Grundlage des zu dem Teilnehmer gehörenden Notrufanzeigeprofils umfasst: einen Heim-Computer, einen Büro-Computer, einen Funkruf-Empfänger, ein Mobiltelefon, ein Heim-Telefon, ein Büro-Telefon, einen Personal Digital Assistant (PDA), ein Fernsehgerät (TV), einen Laptop-Computer und eine Palmtop-Vorrichtung.

## Revendications

1. Procédé de notification d'urgence destiné à être utilisé dans un réseau compatible multimédia, comprenant les étapes suivantes :
sur réception d'un message d'urgence entrant de la part d'une entité autorisée à un noeud desservant un abonné, invocation d'un moteur de session multimédia pour lancer une application de traitement d'appel pour ledit abonné ;
en se basant sur au moins une partie des informations paramétriques en rapport avec ledit message d'urgence entrant, interrogation d'un profil de notification d'urgence associé avec ledit abonné ;
en réponse à ladite étape d'interrogation, détermination par le biais de ladite application de traitement d'appel d'un modèle d'alerte d'urgence particulier à fournir en fonction dudit message d'urgence entrant ; et
activation d'un dispositif pouvant être sélectionné par l'utilisateur pour mettre en oeuvre ledit modèle d'alerte d'urgence particulier.

2. Procédé de notification d'urgence destiné à être utilisé dans un réseau compatible multimédia selon la revendication 1, dans lequel ledit dispositif pouvant être sélectionné par l'utilisateur comprend au moins une portion d'interface multimédia pouvant fonctionner avec le terminal dudit abonné.

3. Procédé de notification d'urgence destiné à être utilisé dans un réseau compatible multimédia selon la revendication 1, comprenant en plus les étapes suivantes :
Détermination si ledit modèle d'alerte d'urgence particulier n'est pas disponible pour être délivré en rapport avec ledit message d'urgence entrant ; et
le cas échéant, sélection d'un modèle d'alerte d'urgence alternatif pour notifier dudit message d'urgence entrant.

4. Procédé de notification d'urgence destiné à être utilisé dans un réseau compatible multimédia selon la revendication 1, comprenant en plus les étapes suivantes :
Détermination de l'efficacité d'une option de priorité à l'encontre dudit modèle d'alerte d'urgence particulier en considération dudit message d'urgence entrant ; et
le cas échéant, notification dudit message d'urgence entrant en conformité avec ladite option de priorité.

5. Procédé de notification d'urgence destiné à être utilisé dans un réseau compatible multimédia selon la revendication 1, dans lequel ledit modèle d'alerte d'urgence particulier comprend un mode de transmission audio.

6. Procédé de notification d'urgence destiné à être utilisé dans un réseau compatible multimédia selon la revendication 1, dans lequel ledit modèle d'alerte d'urgence particulier comprend un mode de transmission vidéo.

7. Procédé de notification d'urgence destiné à être utilisé dans un réseau compatible multimédia selon la revendication 1, dans lequel ledit modèle d'alerte d'urgence particulier comprend un mode de transmission par courrier électronique.

8. Procédé de notification d'urgence destiné à être utilisé dans un réseau compatible multimédia selon la revendication 1, dans lequel ledit modèle d'alerte d'urgence particulier comprend un mode de transmission par télécopie.

9. Procédé de notification d'urgence destiné à être utilisé dans un réseau compatible multimédia selon la revendication 1, dans lequel ledit modèle d'alerte d'urgence particulier comprend un mode de radiomessagerie.

10. Procédé de notification d'urgence destiné à être utilisé dans un réseau compatible multimédia selon la revendication 1, dans lequel ledit modèle d'alerte d'urgence particulier comprend un mode de transmission graphique.

11. Procédé de notification d'urgence destiné à être utilisé dans un réseau compatible multimédia selon la revendication 1, dans lequel ledit modèle d'alerte d'urgence particulier se base sur des informations de type d'urgence associées avec ledit message d'urgence entrant.

12. Procédé de notification d'urgence destiné à être utilisé dans un réseau compatible multimédia selon la revendication 1, dans lequel ledit modèle d'alerte d'urgence particulier se base sur des informations de gravité d'urgence associées avec ledit message d'urgence entrant.

13. Procédé de notification d'urgence destiné à être utilisé dans un réseau compatible multimédia selon la revendication 1, dans lequel ledit modèle d'alerte d'urgence particulier se base sur la zone d'où est originaire ledit message d'urgence entrant.

14. Procédé de notification d'urgence destiné à être utilisé dans un réseau compatible multimédia selon la revendication 1, dans lequel ledit modèle d'alerte d'urgence particulier se base l'identification de ladite entité autorisée.

15. Procédé de notification d'urgence destiné à être utilisé dans un réseau compatible multimédia selon la revendication 14, dans lequel ladite entité autorisée comprend un individu autorisé.

16. Procédé de notification d'urgence destiné à être utilisé dans un réseau compatible multimédia selon la revendication 14, dans lequel ladite entité autorisée comprend une agence gouvernementale autorisée.

17. Procédé de notification d'urgence destiné à être utilisé dans un réseau compatible multimédia selon la revendication 14, dans lequel ladite entité autorisée comprend une entité commerciale autorisée.

18. Système de notification d'urgence destiné à être utilisé dans un réseau compatible multimédia, comprenant :
Des moyens pour invoquer un moteur de session multimédia pour lancer une application de traitement d'appel pour un abonné en fonction d'un message d'urgent entrant initié par un initiateur de message ;
Des moyens de base de données pouvant être utilisés pour stocker un profil de notification d'urgence associé avec ledit abonné ;
Des moyens de logique de service associés avec ladite application de traitement d'appel pour déterminer un modèle d'alerte d'urgence particulier à fournir en fonction dudit message d'urgence entrant en interagissant avec lesdits moyens de base de données ; et
des moyens pour actionner un dispositif pouvant être sélectionné par l'utilisateur pour mettre en oeuvre ledit modèle d'alerte d'urgence particulier.

19. Système de notification d'urgence destiné à être utilisé dans un réseau compatible multimédia selon la revendication 18, dans lequel ledit dispositif pouvant être sélectionné par l'utilisateur comprend au moins une portion d'interface multimédia pouvant fonctionner avec le terminal dudit abonné.

20. Système de notification d'urgence destiné à être utilisé dans un réseau compatible multimédia selon la revendication 18, dans lequel ledit modèle d'alerte d'urgence particulier comprend la fourniture d'au moins une transmission audio, une transmission vidéo, une transmission graphique, une transmission par radiomessagerie et une transmission par courrier électronique.

21. Système de notification d'urgence destiné à être utilisé dans un réseau compatible multimédia selon la revendication 18, comprenant en plus des moyens pour sélectionner un modèle d'alerte d'urgence alternatif lorsque ledit modèle d'alerte d'urgence particulier n'est pas disponible.

22. Système de notification d'urgence destiné à être utilisé dans un réseau compatible multimédia selon la revendication 21, dans lequel ledit modèle d'alerte d'urgence alternatif comprend l'activation de l'ordinateur du domicile dudit abonné pour notifier dudit message d'urgence entrant.

23. Système de notification d'urgence destiné à être utilisé dans un réseau compatible multimédia selon la revendication 21, dans lequel ledit modèle d'alerte d'urgence alternatif comprend l'activation de l'ordinateur du bureau dudit abonné pour notifier dudit message d'urgence entrant.

24. Système de notification d'urgence destiné à être utilisé dans un réseau compatible multimédia selon la revendication 21, dans lequel ledit modèle d'alerte d'urgence alternatif comprend l'activation du récepteur de radiomessagerie dudit abonné pour notifier dudit message d'urgence entrant.

25. Système de notification d'urgence destiné à être utilisé dans un réseau compatible multimédia selon la revendication 21, dans lequel ledit modèle d'alerte d'urgence alternatif comprend l'activation du téléphone mobile dudit abonné pour notifier dudit message d'urgence entrant.

26. Système de notification d'urgence destiné à être utilisé dans un réseau compatible multimédia selon la revendication 21, dans lequel ledit modèle d'alerte d'urgence alternatif comprend l'activation du téléphone du bureau dudit abonné pour notifier dudit message d'urgence entrant.

27. Système de notification d'urgence destiné à être utilisé dans un réseau compatible multimédia selon la revendication 21, dans lequel ledit modèle d'alerte d'urgence alternatif comprend l'activation du téléphone du domicile dudit abonné pour notifier dudit message d'urgence entrant.

28. Système de notification d'urgence destiné à être utilisé dans un réseau compatible multimédia selon la revendication 21, dans lequel ledit modèle d'alerte d'urgence alternatif comprend l'activation de l'assistant numérique personnel (PDA) dudit abonné pour notifier dudit message d'urgence entrant.

29. Système de notification d'urgence destiné à être utilisé dans un réseau compatible multimédia selon la revendication 21, dans lequel ledit modèle d'alerte d'urgence alternatif comprend l'activation du poste de télévision (TV) dudit abonné pour notifier dudit message d'urgence entrant.

30. Système de notification d'urgence destiné à être utilisé dans un réseau compatible multimédia selon la revendication 21, dans lequel ledit modèle d'alerte d'urgence alternatif comprend l'activation de l'ordinateur portable dudit abonné pour notifier dudit message d'urgence entrant.

31. Système de notification d'urgence destiné à être utilisé dans un réseau compatible multimédia selon la revendication 21, dans lequel ledit modèle d'alerte d'urgence alternatif comprend l'activation de l'ordinateur de poche dudit abonné pour notifier dudit message d'urgence entrant.

32. Système de notification d'urgence destiné à être utilisé dans un réseau compatible multimédia selon la revendication 18, dans lequel ledit initiateur du message comprend une personne autorisée.

33. Système de notification d'urgence destiné à être utilisé dans un réseau compatible multimédia selon la revendication 18, dans lequel ledit initiateur du message comprend une entité autorisée.

34. Support accessible par un ordinateur pouvant être utilisé avec un élément de réseau disposé dans un réseau de prochaine génération compatible multimédia, ledit support accessible par un ordinateur comportant une séquence d'instruction qui, lorsqu'elle est exécutée par au moins une entité de traitement associée avec ledit réseau de prochaine génération compatible multimédia, provoque l'exécution des étapes suivantes :
sur réception d'un message d'urgence entrant de la part d'une entité autorisée à un noeud desservant un abonné, invocation d'un moteur de session multimédia pour lancer une application de traitement d'appel pour ledit abonné ;
en se basant sur au moins une partie des informations paramétriques en rapport avec ledit message d'urgence entrant, interrogation d'un profil de notification d'urgence associé avec ledit abonné ;
en réponse à ladite étape d'interrogation, détermination par le biais de ladite application de traitement d'appel d'un modèle d'alerte d'urgence particulier à fournir en fonction dudit message d'urgence entrant ; et
activation d'un dispositif pouvant être sélectionné par l'utilisateur pour mettre en oeuvre ledit modèle d'alerte d'urgence particulier.

35. Support accessible par un ordinateur pouvant être utilisé avec un élément de réseau disposé dans un réseau de prochaine génération compatible multimédia selon la revendication 34, dans lequel ledit dispositif pouvant être sélectionné par l'utilisateur comprend au moins une portion d'interface multimédia pouvant fonctionner avec le terminal dudit abonné.

36. Support accessible par un ordinateur pouvant être utilisé avec un élément de réseau disposé dans un réseau de prochaine génération compatible multimédia selon la revendication 34, dans lequel ledit modèle d'alerte d'urgence particulier comprend la fourniture d'au moins une transmission audio, une transmission vidéo, une transmission graphique, une transmission par radiomessagerie et une transmission par courrier électronique.

37. Support accessible par un ordinateur pouvant être utilisé avec un élément de réseau disposé dans un réseau de prochaine génération compatible multimédia selon la revendication 34, comprenant en plus une autre séquence d'instructions pour sélectionner un modèle d'alerte d'urgence alternatif lorsque ledit modèle d'alerte d'urgence particulier n'est pas disponible.

38. Support accessible par un ordinateur pouvant être utilisé avec un élément de réseau disposé dans un réseau de prochaine génération compatible multimédia selon la revendication 37, dans lequel ledit modèle d'alerte d'urgence alternatif comprend l'activation d'au moins l'un des dispositifs suivants pour notifier dudit message d'urgence entrant en se basant sur ledit profil de notification d'urgence associé audit abonné : un ordinateur à domicile, un ordinateur au bureau, un récepteur de radiomessagerie, un téléphone mobile, un téléphone à domicile, un téléphone au bureau, un assistant numérique personnel (PDA), un poste de télévision (TV), un ordinateur portable et un dispositif de poche.
